# EUROPEAN PATENT APPLICATION

(11) **EP 4 664 639 A1**
(43) Date of publication of application: **17.12.2025**
(21) Application number: 23934731.3
(22) Date of filing: 09.06.2023
(51) Int. Cl.: H01M 50/258, H01M 50/289

(54) **CTP BATTERY PACK AND AUTOMOBILE**

(30) Priority: 28.04.2023 CN 202310483609; 28.04.2023 CN 202321021005 U
(71) Applicant: Eve Energy Co., Ltd., Huizhou Guangdong 516000 (CN)
(72) Inventor: QIU, Wencong, Guangdong 516000 (CN); CHEN, Zhiwei, Guangdong 516000 (CN); CHEN, Chaohai, Guangdong 516000 (CN); JIANG, Jibing, Guangdong 516000 (CN)
(74) Representative: Studio Torta S.p.A.
(86) International application number: PCT/CN2023/099535
(87) International publication number: WO 2024/221552

(57) **Abstract**

Provided are a CTP battery pack and a vehicle having the CTP battery pack. The CTP battery pack includes a housing (1) and at least one battery cell module (2). The housing (1) has at least one first accommodating cavity (15). Each battery cell module (2) is disposed in one first accommodating cavity (15) of the at least one first accommodating cavity (15). The at least one first accommodating cavity (15) is filled with foam (3).

## Description

This disclosure claims priority to Chinese Patent Applications No. 202310483609.8 and No. 202321021005.3, both filed on April 28, 2023 with the China National Intellectual Property Administration, the entire contents of which are incorporated herein by reference.

### Technical Field

The present disclosure relates to the technical field of battery technology, and more particularly to a CTP battery pack and a vehicle.

### Background

As a core component of new energy vehicles, a battery system plays a crucial role in safety, endurance performance, and other aspects. In related technologies of battery systems, during the process of grouping battery cells, the battery cells are generally encapsulated into one battery cell module by peripheral structural members, and then the battery cell module is installed as a unit into a battery housing. This grouping method not only involves a complex structure and a tedious assembly process, but also results in relatively low overall rigidity and strength of the resulting battery pack.

### Summary

Some embodiments of the present disclosure provide a CTP battery pack and a vehicle, which can improve the overall strength of the battery pack while simplifying the assembly process.

The technical solutions adopted by the present disclosure to solve the above problem is as follows.

In a first aspect, some embodiments of the present disclosure provide a CTP battery pack. The CTP battery pack includes a housing and at least one battery cell module. The housing has at least one first accommodating cavity. Each battery cell module is disposed in one first accommodating cavity of the at least one first accommodating cavity. The at least one first accommodating cavity is filled with foam.

In a second aspect, some embodiments of the present disclosure provide a vehicle. The vehicle includes the CTP battery pack as described above.

### Advantages of the Application

The CTP battery pack and vehicle provided by the embodiments of the present disclosure have the following technical effects.

According to the CTP battery pack and vehicle of the embodiments of the present disclosure, each first accommodating cavity inside the housing for placing a corresponding battery cell module is fully filled with the foam, and the foam can immerse and bond the components in the battery cell module, thereby improving the overall rigidity and strength of the battery cell module. At the same time, the foam can bond and fix the battery cell module to the housing, thereby strengthening the structural strength. In the embodiments of the present disclosure, the main components in the battery pack are immersed by the foam to be bonded into an integral whole, thereby improving the overall strength of the battery pack while simplifying the assembly process. In addition, in the embodiments of the present disclosure, since the battery cells of each battery cell module in the CTP battery pack are metal-shelled without insulation film, the foam filled can provide insulation.

### Brief Description of the Drawings

FIG. 1 is an exploded view of a CTP battery pack according to some embodiments of the present disclosure.
FIG. 2 is an exploded view of a partial structure of a CTP battery pack according to some embodiments of the present disclosure.
FIG. 3 is a schematic view of the structure of a CTP battery pack according to some embodiments of the present disclosure.
FIG. 4 is a cross-sectional schematic view of a CTP battery pack according to some embodiments of the present disclosure.
FIG. 5 is a cross-sectional schematic view of the foam in a CTP battery pack according to some embodiments of the present disclosure.
FIG. 6 is a schematic view of the structure of a housing, with the cover plate hidden, in a CTP battery pack according to some embodiments of the present disclosure.
FIG. 7 is a schematic view of the structure of a plastic bracket in a CTP battery pack according to some embodiments of the present disclosure.
FIG. 8 is a schematic view of the structure shown in FIG. 7 from another perspective.
FIG. 9 is a partial schematic view of the structure of multiple plastic brackets spliced together in a CTP battery pack according to some embodiments of the present disclosure.
FIG. 10 is a schematic view of the structure of a flange nut in a CTP battery pack according to some embodiments of the present disclosure.

Reference signs are as follows.
1. Housing; 11. Frame; 111. First support plate; 112. Second support plate; 113. First partition bar; 114. Second partition bar; 12. Cover plate; 13. Bottom protective plate; 14. Top maintenance cover; 15. First accommodating cavity; 16. Pressure-relief cavity; 17. Second accommodating cavity; 2. Battery cell module; 21. Plastic bracket; 211. Pressure-relief hole; 212. First snap-fitting structure; 2121. First groove; 2122. First rib; 213. Second snap-fitting structure; 2131. Second groove; 2132. Second rib; 214. Flange nut; 2141. Lug; 215. Sealing rubber ring; 216. Annular raised edge; 217. Connecting block; 218. Foam pad; 219. Stiffening rib; 22. Battery cell; 23. Liquid-cooling plate; 24. CCS assembly; 3. Foam; 31. Porous structure; 4. Sealing strip.

### Embodiments of the Application

In the description of the present disclosure, it should be noted that the terms "upper", "lower", "front", "rear", "left", "right", "vertical", "horizontal", "top", "bottom", "inside" and "outside" and the like indicating orientations or positional relationships are based on those shown in the accompanying drawings. These terms are intended solely for the purpose of simplifying the description of the present application, and are not intended to indicate or imply that the referenced modules or components must have a particular orientation or be constructed and operated in a particular orientation, and therefore should not be construed as limiting the present disclosure.

Unless otherwise defined, all technical and scientific terms used herein have the same meanings as those generally understood by those skilled in the art to which the present disclosure belongs. The terms used in the specification of the present disclosure are only for the purpose of describing specific embodiments, and are not intended to limit the present disclosure.

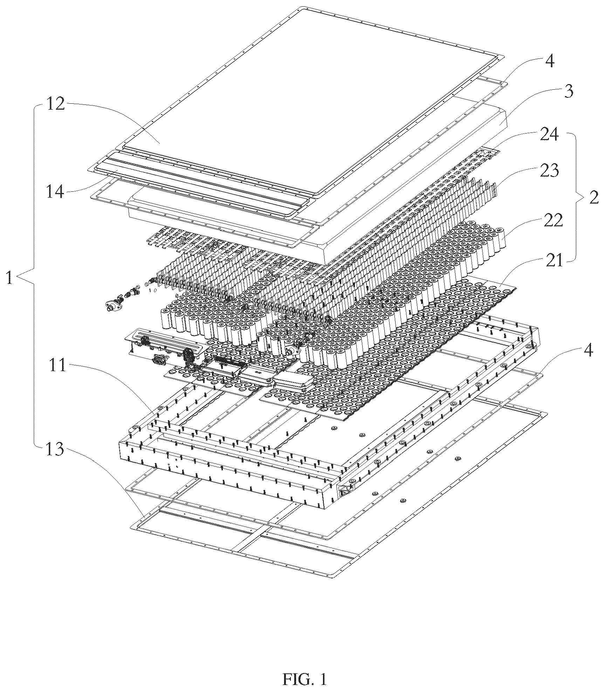

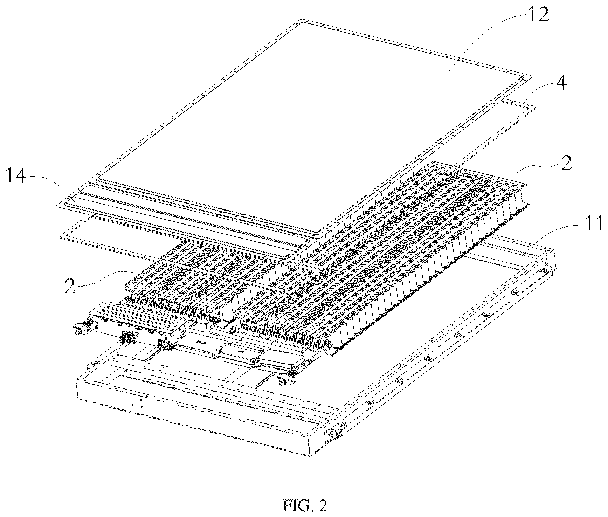

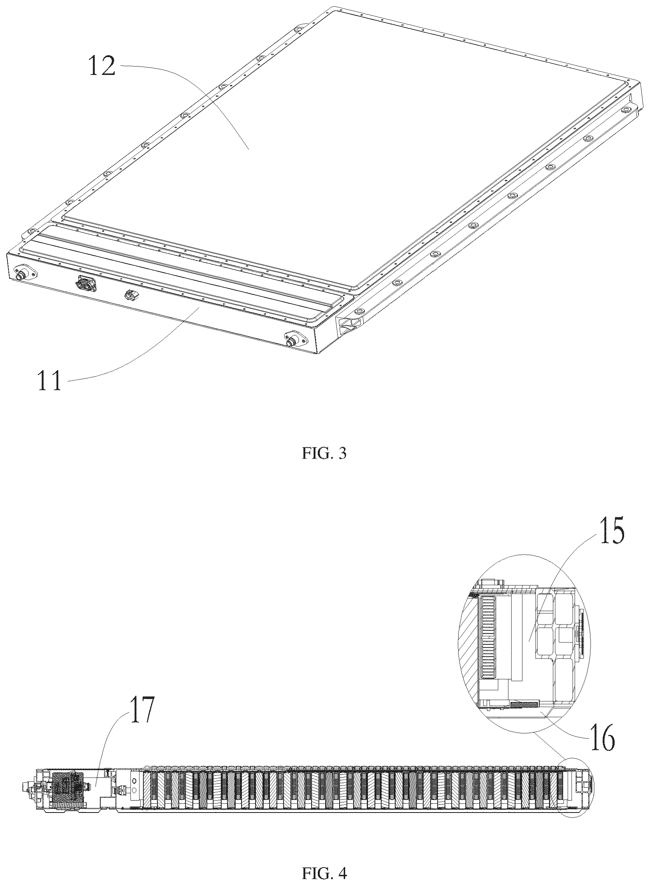

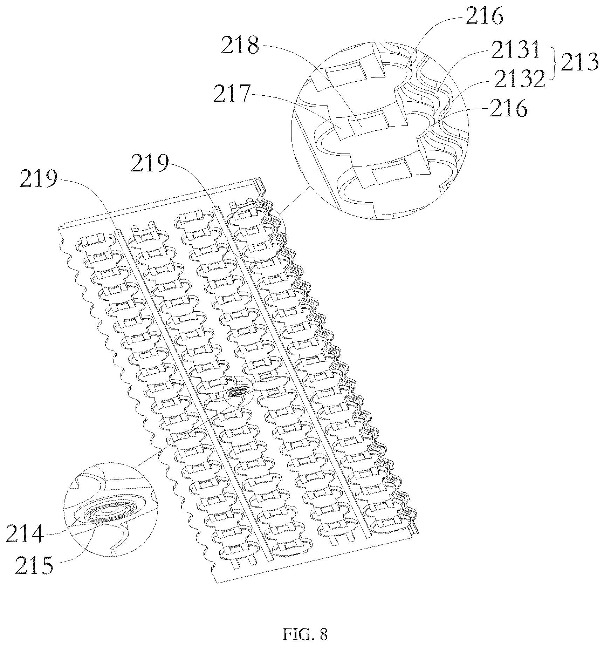

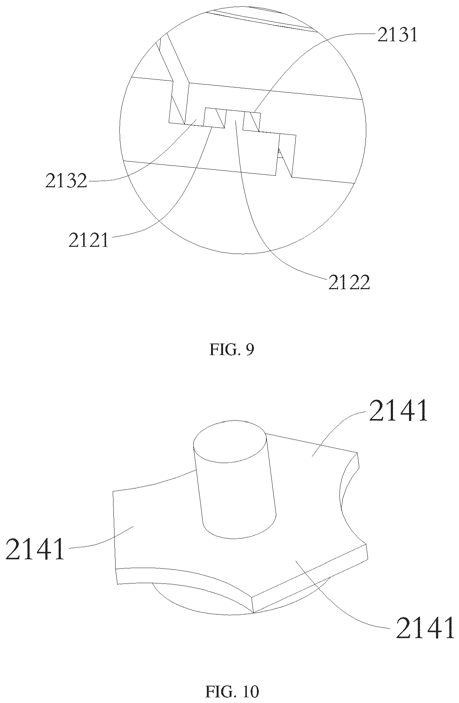

Referring to FIGS. 1-10, some embodiments of the present disclosure provide a CTP battery pack. The CTP battery pack includes a housing 1 and one or more battery cell modules 2. One or more first accommodating cavities 15 for accommodating the one or more battery cell modules 2 are provided inside the housing 1. In some embodiments, each battery cell module 2 includes multiple battery cells 22, multiple liquid-cooling plates 23, one or more plastic brackets 21, and a CCS assembly 24. The battery cells 22 are arranged in rows to form multiple battery cell rows, and a corresponding liquid-cooling plate 23 is provided between two adjacent battery cell rows. In some embodiments, a wall surface of the liquid-cooling plate 23 is wave-shaped, and the battery cells 22 are cylindrical. A sidewall of each battery cell 22 conforms to and contacts a corresponding sidewall of the liquid-cooling plate 23. A flow channel is provided inside the liquid-cooling plate 23, and an inlet nozzle and an outlet nozzle, which communicate with the flow channel, are provided at an end of the liquid-cooling plate 23. When coolant flows through the liquid-cooling plate 23, the liquid-cooling plate 23 can cool battery cells 22 in two battery cell rows. The CCS assembly 24 is disposed above the multiple battery cell rows. In some embodiments, the CCS assembly 24 is implemented in a film-laminated form to reduce the overall height of the battery cell module 2. Each plastic bracket 21 is disposed below the battery cell rows. In some embodiments, each plastic bracket 21 is provided with positioning protrusions in one-to-one correspondence with battery cells 22 to achieve pre-positioning of the battery cells 22 and thereby enable rapid assembly of the battery cells 22. Multiple support plates are provided inside each first accommodating cavity 15, and each plastic bracket 21 abuts against the support plates and is supported by the support plates.

Each first accommodating cavity 15 is filled with foam 3, and the foam 3 bonds the battery cells 22, the liquid-cooling plates 23, the one or more plastic brackets 21, and the CCS assembly 24 into the battery cell module 2, and bonds and fixes the one or more plastic brackets 21 to the support plates.

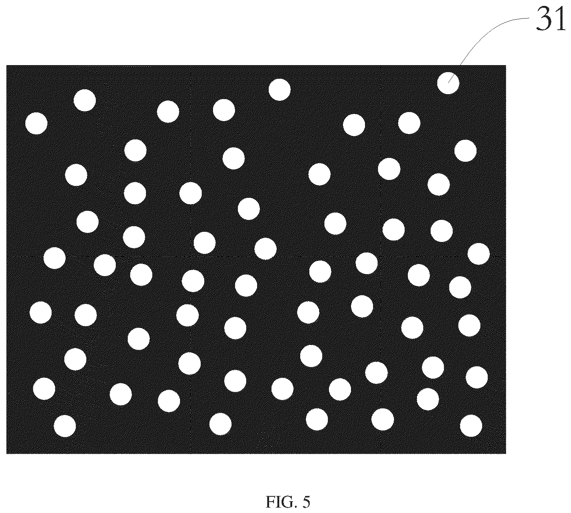

Thus, each first accommodating cavity 15 inside the housing 1 for placing a corresponding battery cell module 2 is fully filled with the foam 3, and the battery cells 22, the liquid-cooling plates 23, the CCS assembly 24, and the plastic bracket(s) 21 are immersed in the foam 3 and can be bonded into the corresponding battery cell module 2 by the foam 3, thereby improving the overall rigidity and strength. At the same time, the foam 3 can bond and fix the plastic bracket(s) 21 to the support plates, thereby strengthening the structural strength. In addition, since the battery cells 22 are metal-shelled without insulation film, the foam 3 filled around the battery cells 22 also provides insulation; after the foam 3 has been solidified, a porous structure 31 is formed (see FIG. 5), which can deform and absorb energy to provide cushioning upon an impact on the battery pack, and the air in the porous structure 31 can provide thermal insulation.

In some embodiments, the support plates include a first support plate 111 and a second support plate 112 respectively disposed on two end sides of the first accommodating cavity 15. The first support plate 111 and the second support plate 112 are configured to support two ends of each plastic bracket 21 and extend below corresponding ends of the liquid-cooling plates 23.

Thus, the first support plate 111 and the second support plate 112 are respectively provided on two end sides of the first accommodating cavity 15, respectively, and extend below corresponding ends of the liquid-cooling plates 23, and since the battery cells 22 and the liquid-cooling plates 23 are bonded into an integral whole by the foam, the extension of the first support plate 111 and the second support plate 112 below the ends of the liquid-cooling plates 23 facilitates effective force transmission. Meanwhile, bonding each plastic bracket 21 to the first support plate 111 and the second support plate 112 using the foam 3 helps enhance the overall stability of the first support plate 111 and the second support plate 112.

In some embodiments, one or more pressure-relief cavities 16 are provided inside the housing 1, with the number of the one or more pressure-relief cavities 16 matching the number of the one or more first accommodating cavities 15, and each pressure-relief cavity 16 is below the corresponding first accommodating cavity 15. Each plastic bracket 21 is provided with multiple pressure-relief holes 211 communicating with a corresponding pressure-relief cavity 16, and the battery cells 22 are disposed at positions in one-to-one correspondence with the pressure-relief holes 211. A pressure-relief valve (not shown) is provided at the bottom of each battery cell 22, the pressure-relief valve communicating with the pressure-relief cavity 16 through a corresponding pressure-relief hole 211. The diameter of the pressure-relief hole 211 is greater than the diameter of the pressure-relief valve, and the difference between the two diameters accounts for positioning tolerance of the battery cell 22. Thus, when thermal runaway occurs in the battery cell 22, pressure can be smoothly released through the pressure-relief hole 211, thereby improving battery safety.

In some embodiments, a second accommodating cavity 17 is further provided inside the housing 1, and the second accommodating cavity 17 is configured to accommodate electrical components and is disposed on a side of the one or more first accommodating cavities 15.

In some embodiments, the electrical components include a BMS module and a BDU module.

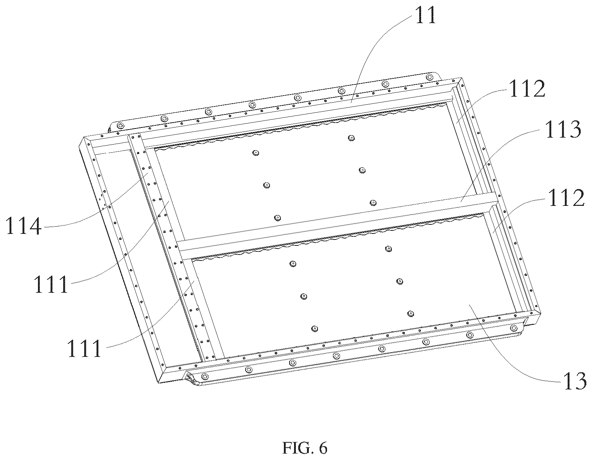

Referring to FIGS. 1 and 6, the housing 1 includes a rectangular frame 11 with upper and lower openings. A first partition bar 113 arranged horizontally and a second partition bar 114 arranged vertically are provided inside the frame 11, thereby dividing the interior of the frame 11 to form two first frames and one second frame, where the two first frames are arranged side by side vertically, and the two first frames are disposed on a side and the second frame is disposed on the other side. In some embodiments, the housing 1 further includes a cover plate 12 covering the two first frames, a top maintenance cover 14 covering the second frame, and a bottom protective plate 13 covering the bottoms of the two first frames and the second frame. The cover plate 12, the two first frames, the support plates, and the plastic brackets 21 form the two first accommodating cavities 15, in which two battery cell modules 2 are arranged, respectively. The bottom protective plate 13, the two first frames, the support plates, and the plastic brackets 21 form two pressure-relief cavities 16, the two pressure-relief cavities 16 being located below the two first accommodating cavities 15, respectively. The top maintenance cover 14, the second frame, and the bottom protective plate 13 form the second accommodating cavity 17.

In some embodiments, frame-shaped sealing strips 4 are provided between the frame 11 and the cover plate 12, between the frame 11 and the top maintenance cover 14, and between the frame 11 and the bottom protective plate 13, respectively, thereby improving the overall sealing of the housing 1 and ensuring battery pack safety.

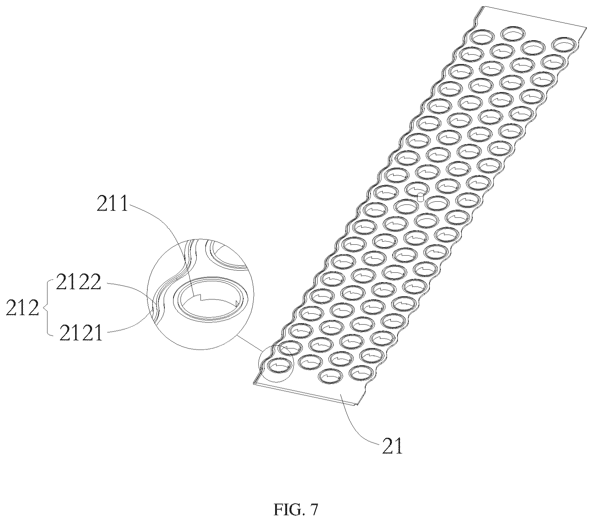

Referring to FIGS. 7-8, each plastic bracket 21 is rectangular with two opposite long side edges and two opposite short side edges. One long side edge is provided with a wave-shaped first snap-fitting structure 212, and the other long side edge is provided with a wave-shaped second snap-fitting structure 213. The first snap-fitting structure 212 and the second snap-fitting structure 213 engage through a snap-fit vertically to splice the two plastic brackets 21. In some embodiments, the first snap-fitting structure 212 includes a first groove 2121 and a first rib 2122, the first groove 2121 being disposed on an upper end face of the one long side edge, and the first rib 2122 protruding from the first groove 2121. The first rib 2122 and the first groove 2121 are wave-shaped. The second snap-fitting structure 213 includes a second groove 2131 and a second rib 2132, the second groove 2131 being disposed on a lower end face of the other long side edge, and the second rib 2132 protruding from the second groove 2131. The second groove 2131 and the second rib 2132 are wave-shaped. When the first snap-fitting structure 212 and the second snap-fitting structure 213 engage vertically, the first rib 2122 is inserted into the second groove 2131, and the second rib 2132 is inserted into the first groove 2121.

Thus, by snap-fitting the first snap-fitting structures 212 and the corresponding second snap-fitting structures 213, multiple plastic brackets 21 can be spliced, thereby allowing for use in various application scenarios. The first snap-fitting structure 212 and the second snap-fitting structure 213 are provided in wave-shaped patterns, thereby their interlock is more secure, preventing relative displacement of the corresponding plastic brackets 21. Furthermore, when the first snap-fitting structure 212 and the second snap-fitting structure 213 engage, the first rib 2122 is inserted into the second groove 2131, and the second rib 2132 is inserted into the first groove 2121, thereby forming a vertical step structure, which in turn prevents the foam from flowing into the pressure-relief cavities 16.

In some embodiments, a flange nut 214 is provided at the middle of a lower end face of each plastic bracket 21, and the flange nut 214 is integrally injection-molded with the plastic bracket 21, and the flange nut 214 is configured for connection with the bottom protective plate 13. The bottom of the flange nut 214 is embedded with a sealing rubber ring 215. In some embodiments, the flange nut 214 is provided with multiple lugs 2141 spaced in a circumferential direction, and the lugs 2141 form a flange surface.

Furthermore, the lower end face of the plastic bracket 21 is provided with multiple annular raised edges 216 along a length direction and a width direction of the plastic bracket 21. Adjacent ones of the annular raised edges 216 along the length direction of the plastic bracket 21 are connected by a corresponding connecting block 217. Each connecting block 217 has a cavity in which a foam pad 218 is inserted.

Thus, the flange nut 214 is provided at the middle of the lower end face of each plastic bracket 21, the flange nut 214 being integrally injection-molded with the plastic bracket 21, and therefore, the flange nut 214 can be secured to the bottom protective plate 13 by a bolt connection. The lugs 2141 of the flange nut 214 form the flange surface to ensure sufficient injection-molding adhesion, which improves structural support strength when the plastic bracket 21 is long. Furthermore, the bottom of the flange nut 214 is embedded with the sealing rubber ring 215 for sealing. The foam pad 218 is disposed in the connecting block 217; and when the plastic bracket 21 is connected to the bottom protective plate 13, the foam pad 218 can cushion and dampen vibration, thereby reducing friction between the plastic bracket 21 and the bottom protective plate 13, ameliorating issues of noise, vibration, and harshness (NVH) of the battery pack.

In some embodiments, multiple stiffening ribs 219 are provided on the lower end face of the plastic bracket 21 along its width direction, each stiffening rib 219 extending along the length direction of the plastic bracket 21. Alternatively, multiple stiffening ribs 219 may be provided on an upper end face of the plastic bracket 21 or on both the upper and the lower end faces of the plastic bracket 21, which is not limited herein.

Additionally, some embodiments of the present disclosure further provide a vehicle. The vehicle includes the above CTP battery pack.

In summary, the CTP battery pack and vehicle provided by the embodiments of the present disclosure achieve the following beneficial effects.

In the CTP battery pack of the embodiments, each first accommodating cavity 15 inside the housing 1 for placing a corresponding battery cell module 2 is fully filled with the foam 3, and the foam 3 can immerse and bond the battery cells 22, the liquid-cooling plates 23, the CCS assembly 24, and the plastic brackets 21 into the corresponding battery cell module 2, thereby improving the overall rigidity and strength. At the same time, the foam 3 can bond and fix the plastic brackets 21 to the support plates, thereby strengthening the structural strength. In addition, the pressure-relief cavities 16 are provided inside the housing 1, and are configured to release pressure when thermal runaway occurs in the battery cells 22, thereby enhancing the safety of the battery pack.

In the CTP battery pack of the embodiments, the first support plate 111 and the second support plate 112 are provided on two end sides of the first accommodating cavity 15, respectively, and extend below the corresponding ends of the liquid-cooling plates 23, and since the battery cells 22 and the liquid-cooling plates 23 are bonded into an integral whole by the foam 3, the extension of the first support plate 111 and the second support plate 112 below the ends of the liquid-cooling plates 23 facilitates effective force transmission. Meanwhile, bonding each plastic bracket 21 to the first support plate 111 and the second support plate 112 using the foam 3 helps enhance the overall stability of the first support plate 111 and the second support plate 112.

In the CTP battery pack of the embodiments, since the battery cells 22 are metal-shelled without insulation film, the foam 3 filled around the battery cells 22 also provides insulation. In addition, after the foam 3 has been solidified, a porous structure 31 is formed, which can deform and absorb energy to provide cushioning upon an impact on the battery pack, and the air in the porous structure 31 can provide thermal insulation.

In the CTP battery pack of the embodiments, the first snap-fitting structure 212 and the second snap-fitting structure 213 are provided on two opposite long side edges of each plastic bracket 21. The first snap-fitting structures 212 and the corresponding second snap-fitting structures 213 engage through a snap-fit vertically to splice the plastic brackets 21, thereby improving splice stability. In addition, when the first snap-fitting structure 212 and the second snap-fitting structure 213 engage vertically, the first rib 2122 is inserted into the second groove 2131, and the second rib 2132 is inserted into the first groove 2121, thereby forming a vertical step structure, which in turn prevents the foam 3 from flowing into the pressure-relief space.

In the CTP battery pack of the embodiments, the flange nut 214 is provided at the middle of the lower end face of each plastic bracket 21, the flange nut 214 being integrally injection-molded with the plastic bracket 21, and therefore, the flange nut 214 can be secured to the bottom protective plate 13 by a bolt connection. The lugs 2141 of the flange nut 214 form the flange surface to ensure sufficient injection-molding adhesion, which improves structural support strength when the plastic bracket 21 is long. Furthermore, the bottom of the flange nut 214 is embedded with the sealing rubber ring 215 for sealing.

In the CTP battery pack of the embodiments, the lower end face of the plastic bracket 21 is provided with multiple annular raised edges 216. Adjacent ones of the annular raised edges 216 along the length direction of the plastic bracket 21 are connected by a corresponding connecting block 217, thereby improving the overall strength of the plastic bracket 21. The foam pad 218 is disposed in the connecting block 217; when the plastic bracket 21 is connected to the bottom protective plate 13, the foam pad 218 can cushion and dampen vibration, thereby reducing friction between the plastic bracket 21 and the bottom protective plate 13, ameliorating issues of noise, vibration, and harshness (NVH) of the battery pack.

It is to be noted that when an element is described as "fixed to" or "disposed on" another element, it may be directly on or indirectly on the other element. When an element is described as "connected with" another element, it may be directly or indirectly connected.

It should be understood that the terms "top", "bottom", "inside", "outside" and the like indicating orientations or positional relationships are based on those shown in the accompanying drawings. These terms are intended solely for the purpose of simplifying the description of the present application, and are not intended to indicate or imply that the referenced modules or components must have a particular orientation or be constructed and operated in a particular orientation, and therefore should not be construed as limiting the present disclosure.

In addition, the terms "multiple" or "a plurality of" in the description of the present disclosure mean two or more, unless otherwise explicitly specified.

## Claims

1. A CTP battery pack, **characterized by** comprising:
a housing (1) having at least one first accommodating cavity (15); and
at least one battery cell module (2), each battery cell module (2) being disposed in one first accommodating cavity (15) of the at least one first accommodating cavity (15);
wherein the at least one first accommodating cavity (15) is filled with foam (3).

2. The CTP battery pack according to claim 1, wherein a plurality of support plates are provided inside each first accommodating cavity (15), each battery cell module (2) comprises at least one plastic bracket (21), and the at least one plastic bracket (21) abuts against the plurality of support plates and is supported by the plurality of support plates; and the foam (3) is configured to bond and fix the at least one plastic bracket (21) to the plurality of support plates.

3. The CTP battery pack according to claim 2, wherein each battery cell module (2) further comprises a plurality of battery cells (22) and a plurality of liquid-cooling plates (23); the plurality of battery cells (22) are arranged in rows to form a plurality of battery cell rows, and a corresponding liquid-cooling plate (23) of the plurality of liquid-cooling plates (23) is provided between two adjacent rows of the plurality of battery cell rows; the at least one plastic bracket (21) is disposed below the plurality of battery cells (22); and the foam (3) is configured to bond the plurality of battery cells (22), the plurality of liquid-cooling plates (23), and the at least one plastic bracket (21) into a whole.

4. The CTP battery pack according to claim 3, wherein each battery cell module (2) further comprises a CCS assembly (24), and the CCS assembly (24) is disposed above the plurality of battery cells (22); and the foam (3) is configured to bond the plurality of battery cells (22) and the CCS assembly (24) into a whole.

5. The CTP battery pack according to claim 3, wherein a wall surface of each liquid-cooling plate (23) is wave-shaped, each battery cell (22) is cylindrical, and the battery cell (22) matches the wall surface of the liquid-cooling plate (23); and a sidewall of each battery cell (22), closer to an adjacent liquid-cooling plate (23) of the plurality of liquid-cooling plates (23), contacts a sidewall of the adjacent liquid-cooling plate (23).

6. The CTP battery pack according to claim 2, wherein the plurality of support plates inside each first accommodating cavity (15) comprise a first support plate (111) and a second support plate (112) disposed on two end sides of the first accommodating cavity (15), respectively; and the first support plate (111) and the second support plate (112) are configured to support two ends of each of the at least one plastic bracket (21) respectively and extend below ends of the plurality of liquid-cooling plates (23).

7. The CTP battery pack according to claim 2, wherein each plastic bracket (21) is rectangular with two opposite long side edges and two opposite short side edges, one long side edge of the two opposite long side edges being provided with a wave-shaped first snap-fitting structure (212), and the other long side edge of the two opposite long side edges being provided with a wave-shaped second snap-fitting structure (213); wherein the first snap-fitting structure (212) and the second snap-fitting structure (213) are configured to engage through a snap-fit vertically with each other to splice the one plastic bracket (21) and another plastic bracket (21).

8. The CTP battery pack according to claim 7, wherein the first snap-fitting structure (212) comprises a first groove (2121) and a first rib (2122), the first groove (2121) being disposed on an upper end face of the one long side edge, and the first rib (2122) protruding from the first groove (2121); the first groove (2121) and the first rib (2122) are wave-shaped; the second snap-fitting structure (213) comprises a second groove (2131) and a second rib (2132), the second groove (2131) being disposed on a lower end face of the other long side edge, and the second rib (2132) protruding from the second groove (2131); and the second groove (2131) and the second rib (2132) are wave-shaped;
wherein when the first snap-fitting structure (212) and the second snap-fitting structure (213) engage vertically, the first rib (2122) is inserted into the second groove (2131), and the second rib (2132) is inserted into the first groove (2121).

9. The CTP battery pack according to claim 2, wherein at least one pressure-relief cavity (16) is provided inside the housing (1) below the at least one first accommodating cavity (15), and a number of the at least one pressure-relief cavity (16) matches a number of the at least one first accommodating cavity (15);
wherein each plastic bracket (21) is provided with a plurality of pressure-relief holes (211) communicating with a corresponding one of the at least one pressure-relief cavity (16), and a plurality of battery cells (22) are disposed at positions in one-to-one correspondence with the plurality of pressure-relief holes (211); and
wherein a pressure-relief valve is provided at a bottom of each battery cell (22), the pressure-relief valve communicating with a corresponding one of the at least one pressure-relief cavity (16) through a corresponding one of the plurality of pressure-relief holes (211).

10. The CTP battery pack according to claim 2, wherein the housing (1) further comprises a bottom protection plate (13); a flange nut (214) is provided at a lower end face of each plastic bracket (21), the flange nut (214) is integrally injection-molded with the plastic bracket (21), and the flange nut (214) is configured for connection with the bottom protective plate (13); and a bottom of the flange nut (214) is embedded with a sealing rubber ring (215).

11. The CTP battery pack according to claim 10, wherein the flange nut (214) is provided with a plurality of lugs (2141) spaced in a circumferential direction to form a flange surface.

12. The CTP battery pack according to claim 10, wherein the lower end face of the plastic bracket (21) is provided with a plurality of annular raised edges (216) along a length direction and a width direction of the plastic bracket (21); two adjacent ones of the plurality of annular raised edges (216) along the length direction of the plastic bracket (21) are connected by a corresponding connecting block (217), and the connecting block (217) has a cavity in which a foam pad (218) is inserted.

13. The CTP battery pack according to claim 1, wherein the housing (1) further comprises a second accommodating cavity (17) for accommodating electrical components, the second accommodating cavity (17) being disposed on a side of the at least one first accommodating cavity (15).

14. The CTP battery pack according to claim 1, wherein the foam (3) is formed into a porous structure (31) after solidification.

15. A vehicle, comprising the CTP battery pack according to any one of claims 1 to 14.
